# EUROPÄISCHE PATENTSCHRIFT

(11) **EP 1 827 798 B1**
(45) Veröffentlichungstag und Bekanntmachung des Hinweises auf die Patenterteilung: **04.01.2017**
(21) Anmeldenummer: 05813264.8
(22) Anmeldetag: 04.11.2005
(51) Int. Cl.: B29C 49/42, B65G 51/03, B65G 17/18, B65G 47/244, B65G 47/14

(54) **VERFAHREN UND VORRICHTUNG ZUM TRANSPORT UND ZUR SORTIERUNG VON VORFORMLINGEN**
METHOD AND DEVICE FOR CONVEYING AND FOR SORTING PREFORMS
PROCEDE ET DISPOSITIF POUR LE TRANSPORT D'EBAUCHES

(30) Priorität: 30.11.2004 DE 102004057564; 11.07.2005 WO PCT/DE2005/001215; 30.09.2005 DE 102005048358
(43) Veröffentlichungstag der Anmeldung: 05.09.2007
(73) Patentinhaber: KHS Corpoplast GmbH, 22145 Hamburg (DE)
(72) Erfinder: BAUMGARTE, Rolf, 22926 Ahrensburg (DE); LINKE, Michael, 22926 Ahrensburg (DE); LEWIN, Frank, 22889 Tangstedt (DE); LITZENBERG, Michael, 21502 Geesthacht (DE)
(74) Vertreter: Hausfeld, Norbert
(86) Internationale Anmeldenummer: PCT/DE2005/001998
(87) Internationale Veröffentlichungsnummer: WO 2006/058512

(56) Entgegenhaltungen:
- AT-U1- 520
- DE-U1- 20 308 513
- US-A- 4 223 778
- US-A- 4 284 370
- US-A- 4 836 971
- US-B1- 6 190 094
- PATENT ABSTRACTS OF JAPAN Bd. 017, Nr. 196 (M-1397), 16. April 1993 (1993-04-16) -& JP 04 341423 A (SHIBUYA KOGYO CO LTD; others: 01), 27. November 1992 (1992-11-27)
- PATENT ABSTRACTS OF JAPAN Bd. 017, Nr. 304 (M-1427), 10. Juni 1993 (1993-06-10) -& JP 05 024648 A (SHIBUYA KOGYO CO LTD; others: 01), 2. Februar 1993 (1993-02-02)

## Beschreibung

Die Erfindung betrifft ein Verfahren zur Blasformung von Behältern, bei dem Vorformlinge durch einen Transport einer Einrichtung zur Blasformung der Behälter zugeführt werden und nach einer thermischen Konditionierung innerhalb mindestens einer Blasform von einer Reckstange gereckt und durch Blasdruckeinwirkung in Behälter umgeformt werden.

Die Erfindung betrifft darüber hinaus eine Vorrichtung zur Blasformung von Behältern, die mit einer Einrichtung zum Transport und zur Zuführung von Vorformlingen versehen ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die Vorformlinge werden der Blasmaschine typischerweise über Förderschienen zugeführt, entlang derer die Vorformlinge in einer räumlichen Orientierung mit Mündungsbereichen nach oben entlanggleiten. Eine Führung der Vorformlinge sowie eine Abstützung der Vorformlinge erfolgt typischerweise unter Verwendung von Stützringen, die unterhalb eines Gewindes der Vorformlinge angeordnet sind.

Entlang der Zuführschienen gleiten die Vorformlinge aufgrund der Einwirkung der herrschenden Schwerkraft. Um bei Blasmaschinen mit einer hohen Produktionskapazität eine zuverlässige Zuführung der Vorformlinge zu gewährleisten, werden relativ lange Zuführschienen verwendet, um trotz der bei einer Bewegung der Vorformlinge entlang der Führungsschienen auftretenden Reibungskräfte einen ausreichenden Staudruck der Vorformlinge im Eingangsbereich zur Blasmaschine zu erreichen. Die erforderliche Länge der Zuführschiene führt zu erheblichen Bauhöhen, die es erforderlich machen, zur Versorgung der Zuführschienen verwendete Steilförderer entweder ebenfalls mit einer großen Höhendimensionierung zu versehen oder diese auf speziellen Gestellen anzuordnen. Solche Blasmaschinen werden in AT000520U1 und DE20308513U1 offenbart. Weitere Blasmaschinen und Transportbahnen werden in US6190094 und US4284370 offenbart.

Typischerweise ist den Zuführschienen ein Sortierer für die Vorformlinge vorgeschaltet. Der Sortierer dient dazu, die ungeordnet einem Vorrat entnommenen Vorformlinge mit einer gleichen räumlichen Orientierung zu versehen und typischerweise mit den Mündungen nach oben orientiert den Zuführschienen zuzuleiten. Als Sortiereinrichtungen sind zum einen sogenannte Rotary-Sorter bekannt, die aus einer rotierenden Scheibe bestehen und bei denen die Ausrichtung der Vorformlinge unter Ausnutzung von Zentrifugalkräften erfolgt.

Für hohe Sortierleistungen je Zeiteinheit werden sogenannte Rollensortierer verwendet, die relativ zueinander parallel angeordnete Rollen besitzen, die gegenläufig rotieren und schräg zur Horizontalen angeordnet sind. Die Verwendung der Rollensortierer führt aufgrund der erforderlichen Gefällestrecke zu einer großen Bauhöhe der gesamten Vorformlingszuführung, die in einem Bereich bis zu sechs Metern liegt und durch die eine relativ große Gesamtaufbaufläche beansprucht wird.

Aufgabe der vorliegenden Erfindung ist es, ein Verfahren der einleitend genannten Art derart zu verbessern, daß eine Zuführung der Vorformlinge zur Blasmaschine auch bei großen Fördermengen unter Vermeidung sehr hoher Bauhöhen erfolgen kann.

Diese Aufgabe wird erfindungsgemäß durch die Merkmale der unabhängigen Ansprüchen gelöst.

Weitere Aufgabe der vorliegenden Erfindung ist es, eine Vorrichtung der einleitend genannten Art derart zu konstruieren, daß bei einer geringen Bauhöhe eine hohe Funktionalität gewährleistet ist.

Durch die horizontale Anordnung der Transportbahn wird in Kombination mit einem geeigneten Antriebsmittel für die Vorformlinge ein wesentlicher Teil der erforderlichen Bauhöhe der Vorformlingszuführung eingespart. Die Antriebsmittel für die Vorformlinge werden vorteilhafterweise derart gewählt, daß ein materialschonender Transport unterstützt wird. Gedacht ist beispielsweise an die Beaufschlagung der Vorformlinge mit strömender Luft, einer Einklemmung des Mündungsbereiches oder eines Stützringbereiches der Vorformlinge zwischen geeigneten Klemm-Mitteln oder die Verwendung von Rollenführungen, die die Vorformlinge reibungsarm entlang einer vorgegebenen Transportbahn führen.

Als besonders vorteilhaft erweist es sich, die horizontale Transportbahn für die Vorformlinge zwischen einem Gehäuse der Blasmaschine und einer Sortiereinrichtung für die Vorformlinge anzuordnen und hierdurch den Abstand zwischen der Sortiereinrichtung und der Blasmaschine zu überbrücken. Ebenfalls erweist es sich als besonders vorteilhaft, die Blasmaschine und die horizontal verlaufende Zuführbahn mit einer Sortiereinrichtung für die Vorformlinge zu kombinieren, die unter Verwendung einer rotierenden Scheibe sowie zugeordneten Führungsschienen ausgebildet ist, die die Vorformlinge unter Ausnutzung von Zentrifugalkräften sortieren und ausrichten.

Der Begriff einer horizontalen Transportbahn für die Vorformlinge umfaßt neben einer exakten waagerechten Ausrichtung auch leichte Gefälle, typischerweise bis zu einem Bereich von +/- 10°, so daß auch in Transportrichtung vergleichsweise geringe Steigungen oder geringe Gefälle durchlaufen werden können. Die konkrete Ausrichtung der im wesentlichen horizontalen Transportbahn ergibt sich unter Berücksichtigung der miteinander zu koppelnden Sortiereinrichtungen und Blasmaschinen sowie der konkreten Bauhöhen der verwendeten Teile. Insbesondere der im weiteren beschriebene Transport der Vorformlinge unter Verwendung von Rollenführungen ermöglicht auch eine sehr flache Anordnung der Sortiereinrichtung mit in Richtung auf die Blasmaschine ansteigender Transportbahn für die Vorformlinge. Die Rollenführungen sind dafür geeignet, eine Steigung der Transportbahn für die Vorformlinge bis zu etwa 30° zu realisieren. Auch eine derart ansteigende Transportbahn für die Vorformlinge erweist sich in Kombination mit Sortiereinrichtungen, die rotierende Scheiben aufweisen, als besonders vorteilhaft.

Gemäß einer vorstehend bereits kurz erwähnten Ausführungsvariante der Erfindung ist daran gedacht, die Vorformlinge entlang der im wesentlichen horizontal verlaufenden Transportbahn unter Verwendung einer Gasströmung zu transportieren.

Die erforderliche Gasströmung kann in einfacher Weise dadurch bereitgestellt werden, daß die Vorschubkraft durch eine Druckluftströmung erzeugt wird.

Eine vorteilhafte Aufbringung der Vorschubkräfte erfolgt dadurch, daß die Vorschubkraft zwischen einer Mündung der Vorformlinge und einem Stützring auf die Vorformlinge einwirkt.

Zur Vermeidung von Anpreßkräften zwischen den Vorformlingen und den verwendeten Führungsschienen erweist es sich als vorteilhaft, daß die Vorschubkraft außenseitig auf die Vorformlinge einwirkt.

Zur optimalen Strömungsausnutzung wird vorgeschlagen, daß die Vorformlinge von der Gasströmung innerhalb eines Strömungskanals bewegt werden.

Eine vorteilhafte Krafterzeugung bei gleichzeitig einfacher mechanischer Konstruktion wird dadurch ermöglicht, daß die Gasströmung in einer Förderrichtung der Vorformlinge schräg auf die Vorformlinge ausgerichtet wird.

Zu einer gleichmäßigen Bereitstellung von Vortriebskräften entlang eines Transportweges der Vorformlinge trägt es bei, daß die Gasströmung entlang des Transportweges der Vorformlinge aus einer Mehrzahl von Ausströmöffnungen heraus in Richtung auf die Vorformlinge geleitet wird.

Zur Erreichung einer geringen Bauhöhe der Gesamtvorrichtung erweist es sich insbesondere als zweckmäßig, daß die Vorformlinge von der Gasströmung in einer im wesentlichen horizontal verlaufenden Richtung transportiert werden.

Die Bereitstellung eines zusätzlichen mechanischen Staudruckes in einem Eingangsbereich der Blasmaschine kann dadurch erreicht werden, daß die Vorformlinge in einem einer Blasmaschine zugewandten Bereich ihres Transportweges auf einem in lotrechter Richtung schräg nach unten orientierten Transportweg bewegt werden.

Eine preiswerte Fertigung bei gleichzeitig einfacher anwendungsabhängiger Konfigurierbarkeit der Fördereinrichtung kann dadurch erreicht werden, daß die Gasströmung durch mindestens ein in einer Führungseinrichtung positioniertes Einlegeteil in Richtung auf die Vorformlinge geleitet wird.

Die Verwendung der Gasströmung zur Erzeugung der Vorschubkraft ermöglicht es in überraschender weise, auch die relativ kompakt ausgebildeten Vorformlinge zu transportieren. Die Vorformlinge weisen vor ihrer Blasverformung ein etwa um den Faktor 10 geringeres Volumen als die nach der Blasverformung vorliegenden flaschenförmigen Behälter auf. Das erfindungsgemäße Verfahren und die erfindungsgemäße Vorrichtung ermöglichen es, auch die in Relation zu ihrem Volumen schweren Vorformlinge in einfacher und zugleich schonender Weise zu transportieren.

Eine vorteilhafte Bewegungsvorgabe erfolgt dadurch, daß der Vorformling mindestens entlang eines Teiles seines Transportweges mit einem Umfangsbereich seiner Oberfläche direkt auf einer eine Rotationsbewegung des Vorformlings vorgebenden Bezugsfläche abrollt.

Ebenfalls ist daran gedacht, daß entlang mindestens eines Teiles des Transportweges des Vorformlings eine Bezugsfläche angeordnet ist, die durch einen direkten Kontakt mit einem Umfangsbereich einer Oberfläche des Vorformlings eine Rotationsbewegung des Vorformlings vorgibt und die derart relativ zum Vorformling positioniert ist, daß der Vorformling auf der Bezugsfläche abrollt.

Durch das Abrollen des Vorformlings auf der Bezugsfläche bei einem unmittelbaren Kontakt des Vorformlings mit der Bezugsfläche werden Hubbewegungen im Zusammenhang mit einem Ineinanderführen des Vorformlings und eines Transportdornes vermieden. Darüber hinaus kann bei einem Kontakt einer äußeren Oberfläche des Vorformlings mit der Bezugsfläche ein innerer Mündungsbereich des Vorformlings freigehalten werden. Der Begriff des Abrollens umfaßt auch ein Abwälzen oder vergleichbare Bewegungen.

Eine Umsetzung einer Translationsbewegung des Vorformlings in eine Rotationsbewegung kann dadurch erfolgen, daß der Vorformling an einer langgestreckt verlaufenden Fläche abrollt.

Zur Unterstützung eines aktiven Antriebes für die Durchführung einer Rotationsbewegung des Vorformlings ist auch daran gedacht, daß der Vorformling an einer Rollenoberfläche abrollt.

Eine besonders zuverlässige Generierung der Rotationsbewegung des Vorformlings kann dadurch erfolgen, daß eine die Rollenoberfläche tragende Rolle angetrieben wird.

Eine Vorgabe einer definierten Translationsbewegung des Vorformlings mit überlagerter Rotationsbewegung erfolgt dadurch, daß der Vorformling von einer Schiene und zwei Rollen geführt wird.

Ein einfacher Rotationsantrieb für die verwendeten Rollen kann dadurch bereitgestellt werden, daß die Rollen zur Bereitstellung eines Rollenantriebes auf einer Gegenschiene abrollen. Der Antrieb der Rollen kann reibschlüssig oder formschlüssig erfolgen. Ein Formschluß kann beispielsweise durch den Eingriff eines mit einer Achse der Rollen verbundenen Zahnrades in eine Zahnstange realisiert werden.

Zur Sicherstellung einer gleichmäßigen Bewegungsübertragung wird vorgeschlagen, daß mindestens eine der Rollen gegenüber dem Vorformling verspannt wird.

Für eine zuverlässige Rotationsvorgabe der Vorformlinge erweist es sich als ausreichend, daß in Transportrichtung hintereinander jede zweite Rolle relativ zum Vorformling aktiv verspannt wird.

Eine weitere Variante zur Sicherstellung einer ausreichenden Reibhaftung besteht darin, daß mindestens bereichsweise die Schiene gegenüber der Gegenschiene verspannt wird. Generell ist es möglich, eine Verspannung der Vorformlinge sowohl radial als auch axial zwischen den Rollen und der Schiene vorzusehen.

Gemäß einer Ausführungsvariante ist vorgesehen, daß die Vorformlinge im Bereich des Transportweges mit ihren Mündungsabschnitten in lotrechter Richtung nach oben orientiert bewegt werden.

Darüber hinaus ist auch daran gedacht, daß die Vorformlinge im Bereich des Transportweges mit ihren Mündungsabschnitten in lotrechter Richtung nach unten orientiert bewegt werden.

Zu einer preiswerten Fertigung der Vorrichtung trägt es bei, daß die Mündungsabschnitte der Vorformlinge während aller aufeinander folgenden Verfahrensschritte der Zufuhr, der Beheizung und der Blasformung auf einem im wesentlichen gleichen Höhenniveau transportiert werden.

Eine universelle Handhabung von Vorformlingen wird dadurch unterstützt, daß eine Rotationsbewegung der Vorformlinge durch einen Reibschluß zwischen den Rollen und der Oberfläche des Vorformlings vorgegeben wird.

Bei speziell geformten Vorformlingen ist es auch möglich, daß eine Rotationsbewegung der Vorformlinge durch einen Formschluß zwischen den Rollen und der Oberfläche des Vorformlings vorgegeben wird.

Zu einer einfachen konstruktiven Realisierung der Vorrichtung trägt es ebenfalls bei, daß die Vorformlinge im wesentlichen horizontal in die Heizstrecke einlaufen und aus der Heizstrecke entnommen werden.

Ein vergrößerter Freiraum bei der Prozeßoptimierung wird dadurch bereitgestellt, daß ein Innenbereich des Mündungsabschnittes während der Durchführung der Beheizung frei von Maschinenelementen gehalten wird.

Ein störungssicherer Vorformlingstransport wird dadurch unterstützt, daß die Vorformlinge im Bereich des Transportweges sowohl in Richtung einer Vorformlingslängsachse als auch in einer bezüglich der Vorformlingslängsachse radialen Richtung geführt werden.

Für standardmäßig gestaltete Vorformlinge erweist es sich als vorteilhaft, daß ein Stützring des Vorformlings entlang des Transportweges in mindestens einer nutförmigen Vertiefung geführt wird.

Eine besonders hohe Positioniergenauigkeit entlang des Transportweges kann dadurch erreicht werden, daß der Vorformling entlang seines Umfanges durch die Schiene und die Rollen an mindestens drei Stellen beaufschlagt wird.

Eine robuste und störungsunanfällige Konstruktion wird dadurch bereitgestellt, daß die Rollen von einer Transportkette miteinander verbunden werden.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Seitenansicht einer mit einer Blasmaschine verbundenen Vorrichtung zum Transport von Vorformlingen, bei der die Vorformlinge entlang einer Leiteinrichtung im wesentlichen horizontal transportiert werden,
- Fig. 6: einen vergrößerten Querschnitt durch die Fördereinrichtung für die Vorformlinge,
- Fig. 7: eine vergrößerte perspektivische Darstellung der Fördereinrichtung in einem teilweise demontierten Zustand,
- Fig. 8: eine weitere teilweise Darstellung der Fördereinrichtung für die Vorformlinge in einer teilweise geschnittenen Seitenansicht,
- Fig. 9: eine Draufsicht auf eine schematische Darstellung einer Transportstrecke für Vorformlinge, bei der jeder Vorformling entlang wenigstens eines Teiles des Halsbereiches von einer Längsführung und zwei rollenartigen Führungen beaufschlagt ist,
- Fig. 10: ein Längsschnitt gemäß Schnittlinie X-X in Fig. 9,
- Fig. 11: eine perspektivische Darstellung der Transportstrecke gemäß Fig. 9,
- Fig. 12: eine vergrößerte perspektivische Darstellung der Einrichtung gemäß Fig. 11 im Bereich eines Kettenrades,
- Fig. 13: eine Draufsicht auf ein mit drei Rollen versehenes zangenartiges Halteelement für einen Vorformling,
- Fig. 14: einen Querschnitt gemäß Schnittlinie XIV-XIV in Fig. 13,
- Fig. 15: eine perspektivische Draufsicht auf eine Sortiereinrichtung für Vorformlinge, die eine Rotationsscheibe sowie unbeweglich angeordnete Führungsschienen aufweist,
- Fig. 16: eine Darstellung einer zu Fig. 15 ähnlichen Sortiereinrichtung mit zusätzlicher Führungsschiene entlang eines Außenumfanges der Rotationsscheibe,
- Fig. 17: eine gegenüber Fig. 16 abgewandelte Ausführungsform mit zusätzlichen Führungstaschen für die Vorformlinge im Bereich eines Außenumfanges der Rotationsscheibe,
- Fig. 18: eine gegenüber Fig. 16 abgewandelte Ausführungsform mit spiralförmig angeordneten feststehenden Führungsschienen und
- Fig. 19: eine Abwandlung zur Ausführungsform gemäß Fig. 18 mit zusätzlichen Führungstaschen für die Vorformlinge am Außenumfang der Rotationsscheibe.

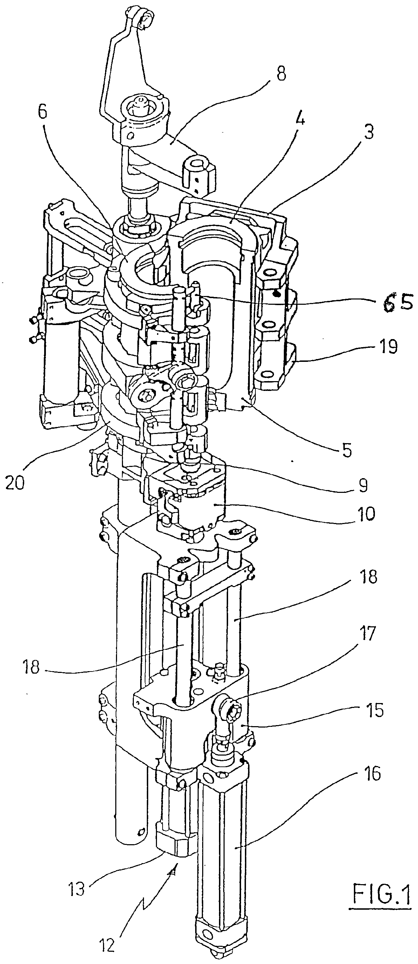

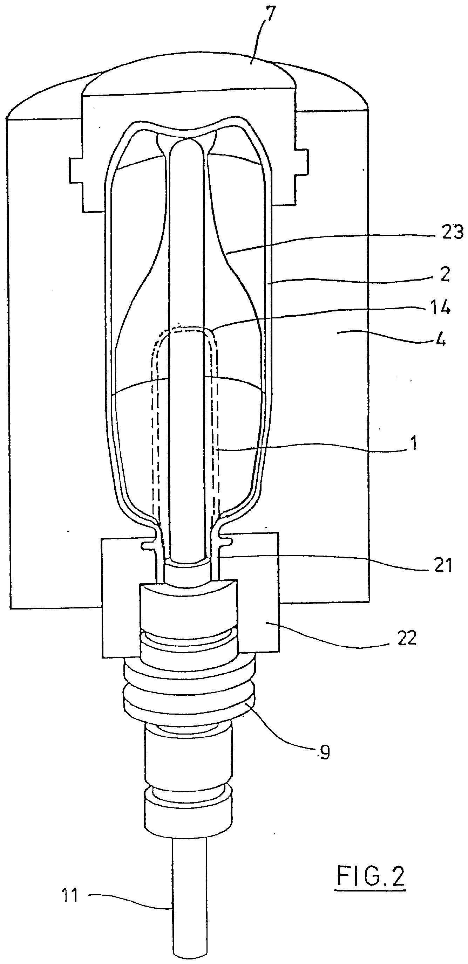

Die Vorrichtung zum Transport von Vorformlingen (1) führt die Vorformlinge (1) einer Blasmaschine zu, die als eine Vorrichtung zur Umformung von Vorformlingen (1) in Behälter (2) ausgebildet ist und deren prinzipieller Aufbau in Fig. 1 und in Fig. 2 veranschaulicht ist.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind.

Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

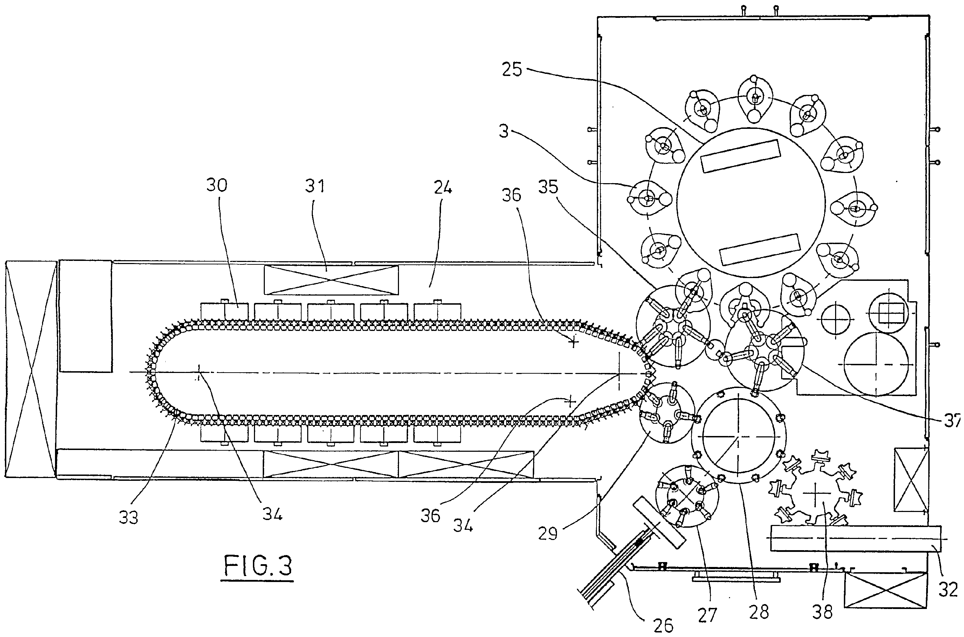

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im un-mittelbaren Übergabebereich zum Übergaberad (29) und zum Eingaberad (35). Alternativ zur Verwendung von ketten-artigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

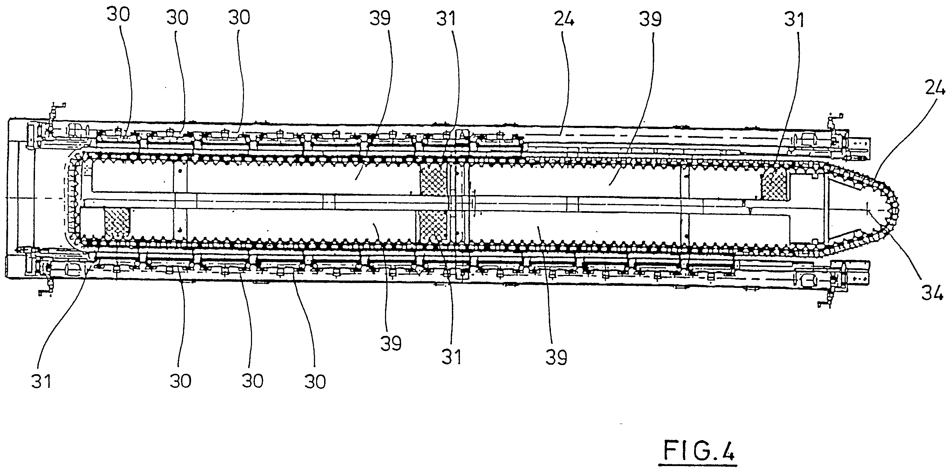

In der in Fig. 4 dargestellten modifizierten Heizstrekke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

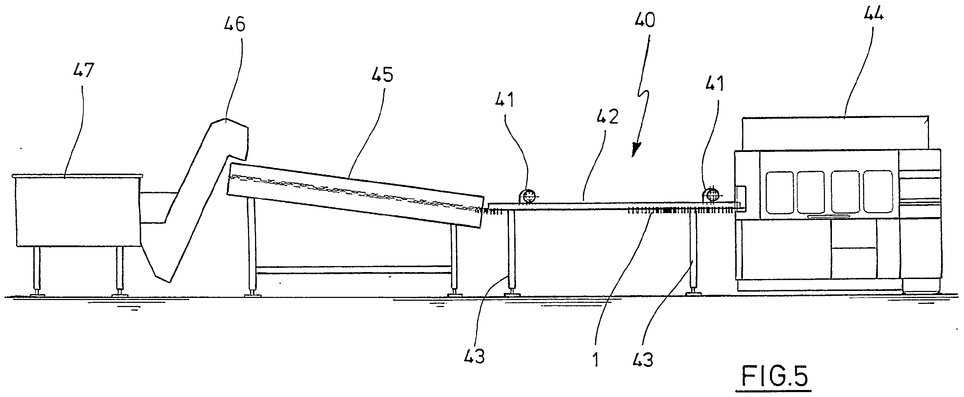

Fig. 5 zeigt eine Seitenansicht einer Vorrichtung zur Förderung von Vorformlingen (1), die mit der Vorrichtung zur Blasformung von Behältern (2) verbunden ist. Die Vorrichtung zum Transport von Vorformlingen (1) weist eine Förderstrecke (40) auf, die mit mindestens einer Antriebseinrichtung für die Vorformlinge (1) versehen ist. Die Antriebseinrichtung kann aus Düsen bestehen, die mit einer Gasströmungsquelle (41) gekoppelt sind. Die Gasströmungsquelle (41) kann beispielsweise als ein Gebläse ausgebildet sein. Bei der in Fig. 5 dargestellten Ausführungsform erstreckt sich die Förderstrecke (40) im wesentlichen in einer horizontalen Richtung.

Die Förderstrecke (40) ist im wesentlichen aus einer Führungseinrichtung (42) sowie Standfüßen (43) ausgebildet, die eine geeignete Vertikalpositionierung der Führungseinrichtung (42) vorgeben. Im Bereich ihrer einer Blasmaschine (44) abgewandten Ausdehnung ist die Förderstrecke (40) mit einer Sortiereinrichtung (45) für die Vorformlinge (1) verbunden. Zur Sortiereinrichtung (45) werden die Vorformlinge (1) von einem Steilförderer (46) transportiert. Vor ihrer Zuführung zum Steilförderer (46) werden die Vorformlinge (1) im Bereich eines Vorratsbehälters (47) aufbewahrt. Die Sortiereinrichtung (45) weist ausgehend vom Steilförderer (46) in Richtung auf die Förderstrecke (40) ein leichtes Gefälle auf, typischerweise in einem Bereich von etwa 10°.

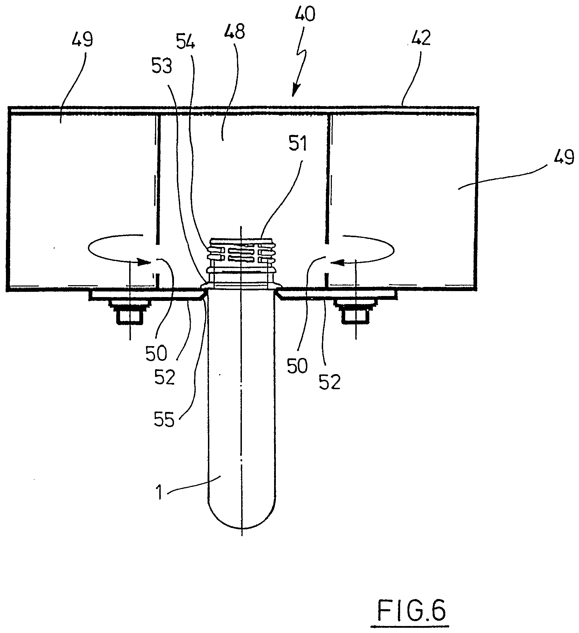

Fig. 6 zeigt einen vergrößerten Querschnitt durch die Führungseinrichtung (42). Es ist zu erkennen, daß die Führungseinrichtung (42) im wesentlichen aus einem in einem mittleren Bereich angeordneten Strömungskanal (48) sowie zwei jeweils neben dem Strömungskanal (48) angeordneten Versorgungskanälen (49) ausgebildet ist. Die Versorgungskanäle (49) sind über Ausströmöffnungen (50) mit dem Strömungskanal (48) verbunden. In die Strömungskanäle (48) wird die zum Vortrieb der Vorformlinge (1) verwendete Gasströmung von den Gasströmungsquellen (41) eingeleitet.

Die Vorformlinge (1) ragen mit Mündungsbereichen (51) in den Strömungskanal (48) hinein. Eine Abstützung der Vorformlinge (1) erfolgt unter Verwendung von Stützelementen (52) unterhalb eines Stützringes (53) der Vorformlinge (1). Außenseitig am Mündungsbereich (51) ist bei den Vorformlingen (1) typischerweise ein Gewinde (54) angeordnet.

Zur Gewährleistung einer möglichst reibungsarmen Führung der Vorformlinge (1) sind die Stützelemente (52) im Bereich ihrer dem Vorformling (1) zugewandten Ausdehnung mit einer Anschrägung (55) versehen. Insbesondere wird hierdurch bei einem seitlichen Verkippen der Vorformlinge (1) ein Festklemmen vermieden.

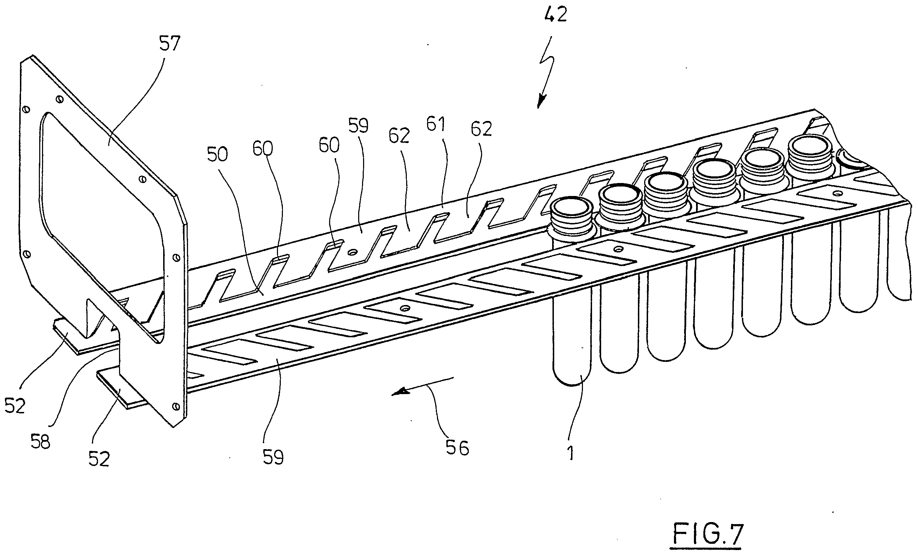

Fig. 7 zeigt eine perspektivische Darstellung der Führungseinrichtung (42) in einem teilweise demontierten Zustand. In einer Förderrichtung (56) der Vorformlinge (1) wird die Führungseinrichtung (52) von einem Enddekkel (57) begrenzt. Der Enddeckel (57) weist eine Ausnehmung (58) auf, um einen Durchlaß der Vorformlinge (1) zu ermöglichen.

Insbesondere veranschaulicht Fig. 7, daß die Ausströmöffnungen (50) unter Verwendung von Einlegeteilen (59) bereitgestellt werden. Die Einlegteile (59) können als preiswerte Stanzteile aus Streifenblechen hergestellt werden. Die Einlegteile (59) sind mit Schlitzen (60) versehen, die in Förderrichtung (56) schräg verlaufen. Durch die schräge Anordnung der Schlitze (60) wird die Gasströmung mit einer in Förderrichtung (56) ausgerichteten Bewegungskomponente in den Strömungskanal (48) eingeleitet und übt somit eine in Förderrichtung (56) ausgerichtete Vortriebskraft auf die Vorformlinge (1)

Durch die Anordnung der Schlitze (60) der Einlegeteile (59) werden die Einlegeteile (59) mit einer kammartigen Struktur versehen. Ein durchgehend in Förderrichtung (56) verlaufender Basisstreifen (61) trägt dabei die Schlitze (60) voneinander trennende Distanzelemente (62). Die Schlitze (60) verlaufen ausgehend vom Basisstreifen (61) und besitzen den Vorformlingen (1) zugewandt angeordnete offene Endbereiche zur Bereitstellung der Ausströmöffnungen (50).

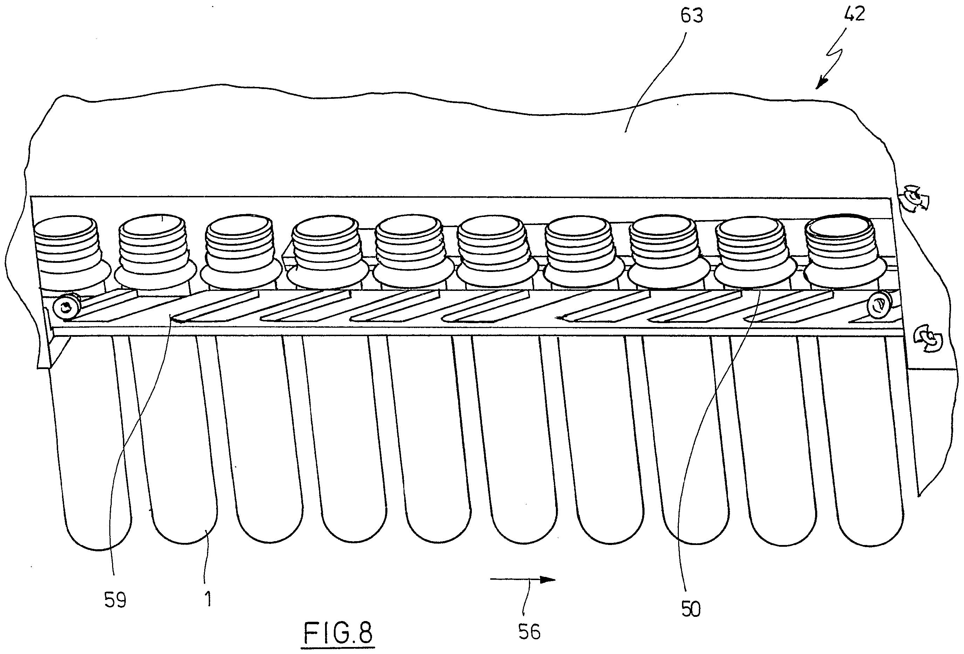

Fig. 8 zeigt eine weitere perspektivische Darstellung der Führungseinrichtung (42) in einem teilweise demontierten Zustand in einer teilweise geschnittenen Abbildung. Die Förderrichtung (56) ist bei dieser Darstellung entgegen der Abbildung in Fig. 7 in der Zeichnungsebene von links nach rechts orientiert. Durch die teilweise geschnittene Darstellung eines Seitenteiles (63) der Führungseinrichtung (42) ist ein Blick auf die in Förderrichtung (56) hintereinander angeordneten Vorformlinge (1) möglich.

Fig. 8 veranschaulicht insbesondere, daß eine relativ große Anzahl von Ausströmöffnungen (50) entlang der Längsausdehnung der Führungseinrichtung (42) angeordnet sind. Zur gleichmäßigen Aufbringung von Vorschubkräften erweist es sich insbesondere als zweckmäßig, wenn die Anzahl der Ausströmöffnungen (50) etwa der Anzahl der innerhalb der Führungseinrichtung (42) befindlichen Vorformlinge (1) entspricht. Bevorzugt ist ein Verhältnis der Anzahl von Vorformlingen (1) zur Anzahl der Ausströmöffnungen (50) im Bereich von 0,5 bis 2,0. Dieser Bereich stellt einen guten Kompromiß zwischen einer möglichst gleichmäßigen Einbringung der Vortriebskräfte und einer einfachen mechanischen Fertigung dar.

Hinsichtlich der räumlichen Orientierung der Führungseinrichtung (42) sind unterschiedliche Varianten realisierbar. Fig. 5 zeigt einen im wesentlichen horizontalen Verlauf der Führungseinrichtung (42). Denkbar ist es ebenfalls, ein leichtes Gefälle von der Sortiereinrichtung (45) in Richtung auf die Blasmaschine (44) vorzusehen, um die pneumatische Förderung durch eine zusätzliche Schwerkrafteinwirkung zu unterstützen. Bei Verwendung ausreichend starker Gasströmungsquellen (41) ist es grundsätzlich aber auch möglich, zur weiteren Reduzierung der Bauhöhe einen Anstieg der Führungseinrichtung (42) ausgehend von der Sortiereinrichtung (45) in Richtung auf die Blasmaschine (44) vorzusehen.

Gemäß einer weiteren Ausführungsvariante verläuft die Führungseinrichtung (42) ausgehend von der Sortiereinrichtung (45) zunächst im wesentlichen horizontal und mündet im Bereich der der Blasmaschine (44) zugewandten Ausdehnung in eine Gefällestrecke ein. Hierdurch wird im Eingangsbereich der Blasmaschine (44) ein zusätzlicher mechanischer Staudruck der Vorformlinge (1) bereitgestellt.

Alternativ zu der vorstehend beschriebenen Realisierung der Antriebseinrichtung für die Vorformlinge im Bereich der Förderstrecke (40) können auch andere Antriebseinrichtungen verwendet werden, die eine ausreichend schonende Vortriebsbewegung der Vorformlinge (1) gewährleisten. Nachfolgend wird ein Antriebskonzept für die Vorformlinge (1) unter Verwendung von Rollen (42) beschrieben, das entlang unterschiedlicher Förderstrecken (40) verwendbar ist. Die Anwendung des Transportprinzips unter Verwendung von Rollen (42) wird nachfolgend zunächst am Beispiel der Heizstrecke (24) beschrieben, sämtliche erläuterten Konstruktionsvarianten sind aber auch auf den Transport der Vorformlinge entlang beliebiger anderer Förderstrecken (40) und insbesondere für einen Transport der Vorformlinge entlang eine Zuführeinrichtung geeignet, die die Sortiereinrichtung (45) mit der Blasmaschine (44) verbindet und die eine im wesentlichen horizontal verlaufenden Transportweg für die Vorformlinge (1) bereitstellt.

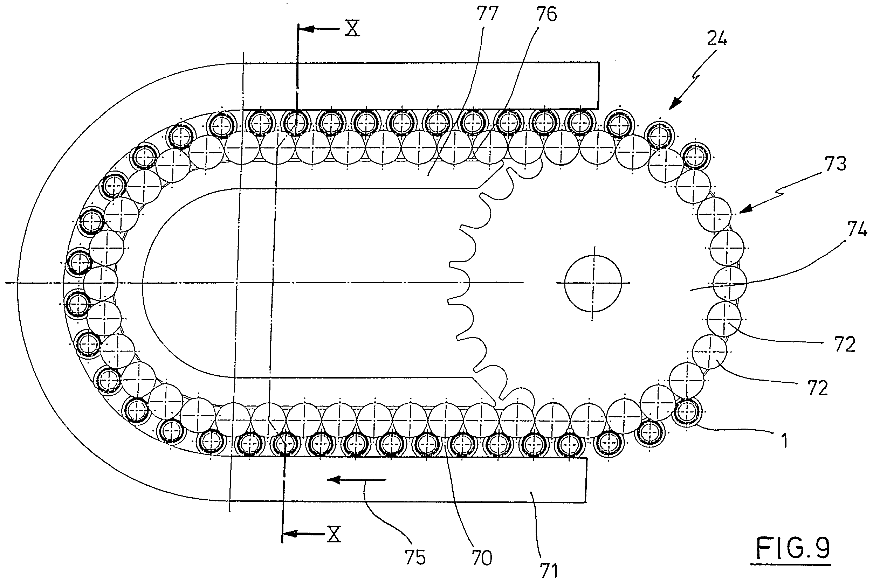

Fig. 9 zeigt eine Draufsicht auf die Heizstrecke (24). Es ist zu erkennen, daß die Vorformlinge (1) entlang eines Transportweges (70) durch die Heizstrecke (24) hindurch zwischen einer Schiene (71) und Rollen (72) geführt sind. Die Schiene (71) ist ortsfest und stationär angeordnet. Die Rollen (72) sind zu einer Transportkette (73) miteinander verbunden und die Transportkette (73) ist über ein Kettenrad (74) geführt.

Die Rollen (72) sind derart angeordnet, daß jeweils zwei Rollen (72) einen Vorformling (1) beaufschlagen. Unter Berücksichtigung der Schiene (71) liegt somit für jeden Vorformling (1) eine Dreipunktführung vor, wobei hierdurch begrifflich auch eine Führung entlang von drei Kontaktlinien umfaßt ist.

Bei einer Vorwärtsbewegung der Transportkette (73) in einer Transportrichtung (75) wälzen sich die Rollen (72) auf einer Oberfläche (76) einer Gegenschiene (77) ab. Die Gegenschiene (77) erstreckt sich im wesentlichen beabstandet und parallel zur Schiene (71). Eine Bewegung der Transportkette (73) wird durch eine Rotation des angetriebenen Kettenrades (74) vorgegeben.

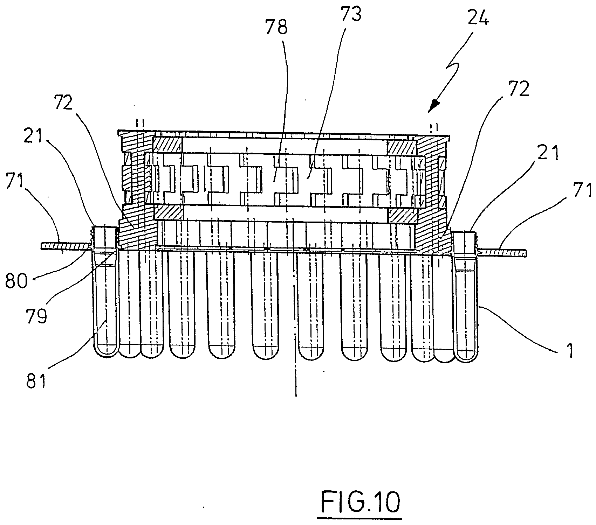

Fig. 10 veranschaulicht in einer Querschnittdarstellung insbesondere den Aufbau der Transportkette (73). Es ist zu erkennen, daß die Transportkette (73) aus einzelnen Kettengliedern (78) ausgebildet ist, die beweglich miteinander verbunden sind. Die Rollen (72) beaufschlagen beim dargestellten Ausführungsbeispiel die Vorformlinge (1) im Bereich derer Mündungsabschnitte (21). Durch eine Rotation der Rollen (72) und einen Andruck der Rollen (72) gegen die Mündungsabschnitte (21) werden auch die Vorformlinge (1) in Rotation versetzt. Im Bereich der Schienen (71) sind die Vorformlinge (1) derart mit Stützringen (79) geführt, daß die Stützringe (79) in nutartige Vertiefungen (80) der Schienen (71) eingreifen. Es erfolgt hierdurch eine Führung der Vorformlinge (1) in Richtung von Vorformlingslängsachse (81).

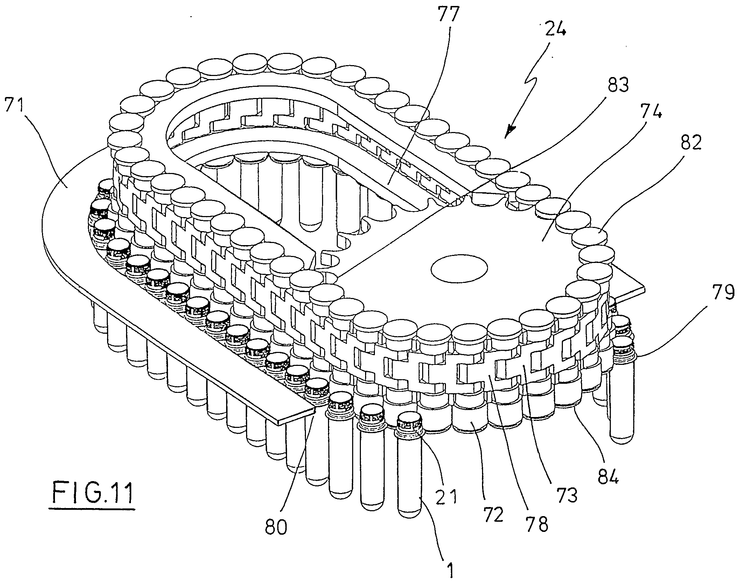

Aus Fig. 10 ist insbesondere zu erkennen, daß der Mündungsabschnitt (21) innenseitig frei bleibt. Die perspektivische Darstellung in Fig. 11 veranschaulicht nochmals den Aufbau der Transportkette (73) sowie die Führung der Vorformlinge (1) im Bereich der Heizstrecke (24) bzw. einer anderen Transportbahn.

Es ist insbesondere zu erkennen, daß die Vorformlinge ohne Durchführung von Hubbewegungen in horizontaler Richtung in die Heizstrecke (24) einlaufen und auch wieder in horizontaler Richtung aus der Heizstrecke (24) entnommen werden. Zur Unterstützung eines Eingriffes der Transportkette (73) in das Kettenrad (74) ist die Transportkette (73) mit runden Profilelementen (72) versehen, die an eine Verzahnung (83) des Kettenrades (74) angepaßt ausgebildet sind.

Zur Vereinfachung sind die in Fig. 3 und Fig. 4 skizzierten Heizstrahler (30) in den Fig. 9 bis 12 nicht dargestellt. Bei den dargestellten Ausführungsbeispielen würden die Heizstrahler (30) unterhalb der Schiene (71) positioniert werden. Innenliegend und gegenüber zu den Heizstrahlern (30) werden Reflektoren oder gegebenenfalls weitere Heizstrahler (30) positioniert. Alternativ zum dargestellten Transport der Vorformlinge (1) mit ihren Mündungsabschnitten (21) in lotrechter Richtung nach oben ist es ebenfalls ohne weiteres möglich, einen Transport und eine Beheizung der Vorformlinge (1) mit ihren Mündungsabschnitten in lotrechter Richtung nach unten orientiert vorzunehmen. Bei einer derartigen Ausführungsform würden die Heizstrahler (30) oberhalb der Führungsschiene (71) angeordnet werden.

Zur Vermeidung einer unerwünschten Erwärmung der Mündungsabschnitte (21) der Vorformlinge (1) ist daran gedacht, während der Beheizung Kühlluft in Richtung auf die Mündungsabschnitte (21) zu leiten. Beim dargestellten Ausführungsbeispiel erweist es sich als besonders vorteilhaft, die Kühlluft in lotrechter Richtung von oben nach unten gegen die Mündungsabschnitte (21) zu richten. Alternativ oder ergänzend können aber auch andere Strömungsrichtungen realisiert werden.

Fig. 11 veranschaulicht ebenfalls, daß die Rollen (72) mit einem Rollenprofil (84) versehen sind, das als nutartige Vertiefung ausgebildet ist. Das Rollenprofil (84) ist ähnlich wie die Vertiefung (80) im Bereich der Schiene (71) an die Dimensionierung des Stützringes (79) angepaßt ausgebildet. Hierdurch wird auch im Bereich der Rollen (72) eine Führung der Vorformlinge (1) in Richtung der Vorformlingslängsachse (81) bereitgestellt.

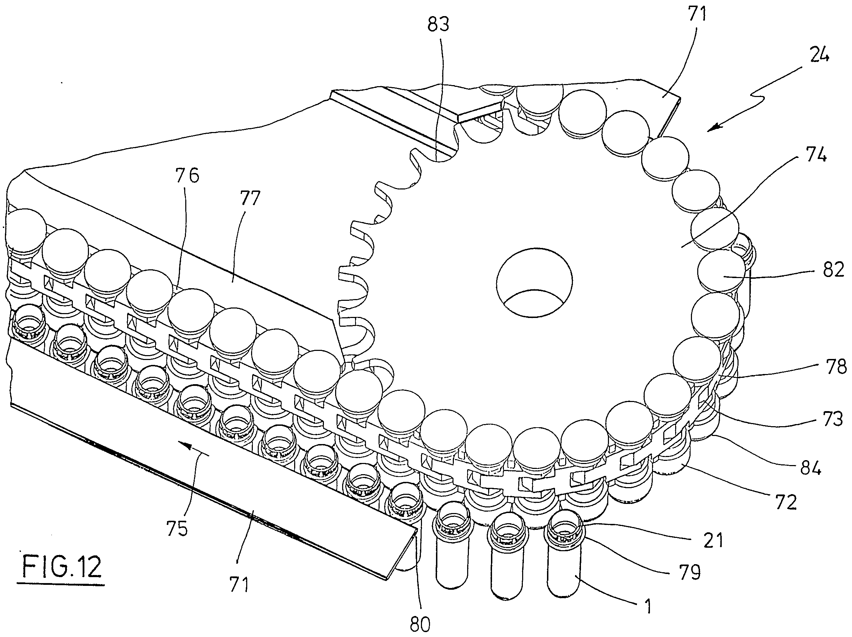

Fig. 12 veranschaulicht in einer weiteren perspektivischen Darstellung das Zusammenwirken der Führungsschiene (71), der Vorformlinge (1) und der Rollen (72). Zur Sicherstellung einer Rotationsbewegung der Vorformlinge (1) sind unterschiedliche Ausführungsvarianten denkbar. In der Regel ist es völlig ausreichend, die Rollen aufgrund der Zugspannung innerhalb der Transportkette (73) auf der Gegenschiene abrollen zu lassen und einen Kontakt zwischen den Rollen (72) und den Vorformlingen (1) aufgrund der von den Rollen (72) auf die Vorformlinge (1) ausgeübten Vorschubkräften zu realisieren.

Darüber hinaus ist es aber auch möglich, eine Verspannung der Rollen (72) gegenüber den Vorformlingen (1) zu realisieren und hierdurch eine ausreichende Reibhaftung bereitzustellen. Der Kontakt zwischen den Vorformlingen (1) und den Rollen (72) kann darüber hinaus durch eine günstige Materialauswahl der Rollen (72) vorteilhaft beeinflußt werden. Gemäß einer weiteren Ausführungsvariante ist es auch denkbar, die Gegenschiene (77) aus einzelnen Segmenten auszubilden, die relativ zur Schiene (71) federnd verspannt werden. Die Vorformlinge (1) und die Rollen (72) werden hierdurch zwischen den Schienen (71, 77) vorgebbar eingespannt. Alternativ kann ebenfalls eine segmentartige Ausbildung der Schiene (71) realisiert werden.

Ebenfalls ist daran gedacht, durch eine geeignete Oberflächengestaltung der Vorformlinge (1) und der Rollen (72) für einen Formschluß und somit für einen zahnradartigen Kontakt zu sorgen.

Alternativ zur dargestellten abrollenden oder abwälzenden Beaufschlagung der Vorformlinge (1) im Bereich einer äußeren Oberfläche ist es grundsätzlich auch möglich, einen entsprechenden rollenden Kontakt im Bereich einer inneren Oberfläche, vorzugsweise im Bereich des Mündungsabschnittes (21), bereitzustellen. Hierdurch würde allerdings der Vorteil eines innen freien Mündungsabschnittes (21) nicht erreicht werden können.

Als Material für die Schienen (71, 77), die Kettenglieder (78) sowie die Rollen (72) können sowohl Metalle als auch Kunststoffe oder elastomere Materialien verwendet werden. Die konkrete Materialauswahl erfolgt hierbei unter Berücksichtigung der erforderlichen thermischen Festigkeit sowie der mechanischen Belastbarkeit und unter Berücksichtigung konkreter Verschleißanforderungen.

Bei einer Verspannung der Rollen (72) relativ zu den Vorformlingen (1) ist es in der Regel ausreichend, jede zweite der Rollen (72) gegenüber den Vorformlingen (1) zu verspannen. Aufgrund der Anordnung der Rollen (72) relativ zueinander drückt hierbei die aktiv verspannte Rolle den Vorformling (1) auch gegen die nicht verspannte Rolle, so daß insgesamt eine Verspannung aller den Vorformlingen beaufschlagenden Bauelemente relativ zum Vorformling (1) erreicht wird.

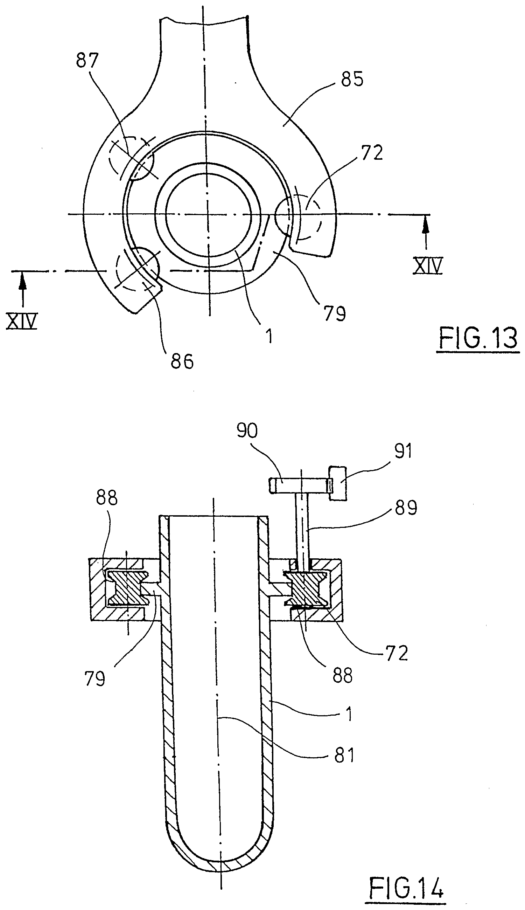

Gemäß der Ausführungsform in Fig. 13 wird der Vorformling (1) von einem Tragelement (85) gehaltert, das mit einer angetriebenen Rolle (72) und zwei Gegenrollen (86, 87) versehen ist. Die Rollen haltern den Vorformling (1) im Bereich des Stützrings (79).

Fig. 14 veranschaulicht in einem Querschnitt die Konstruktion in weiteren Details. Es ist zu erkennen, daß die Rollen (72, 86, 87) ein nutartiges Umfangsprofil (88) aufweisen, in das der Stützring (79) eingreift. Hierdurch ist eine Verschiebung des Vorformlings (1) in Richtung der Vorformlingslängsachse (81) ausgeschlossen.

Die angetriebene Rolle (72) ist über eine Welle (89) mit einem Antriebsrad (90) verbunden. Das Antriebsrad (90) kann beispielsweise als ein Zahnrad ausgebildet sein, das in ein stationäres Profilelement (91) eingreift. Das Profilelement (61) kann beispielsweise als Zahnstange oder als Kette realisiert sein.

Bei einer Bewegung des Vorformlings (1) entlang des Transportweges (70) rollt das Antriebsrad (90) im Profilelement (91) ab und verursacht hierdurch eine Rotationsbewegung der Rolle (72) und damit eine Rotationsbewegung des Vorformlings (1).

Die Tragelemente (85) können ähnlich zur Grundkonstruktion in Fig. 11 an Kettengliedern (78) befestigt sein, die eine Transportkette (83) ausbilden und entlang des Transportweges (70) geführt sind.

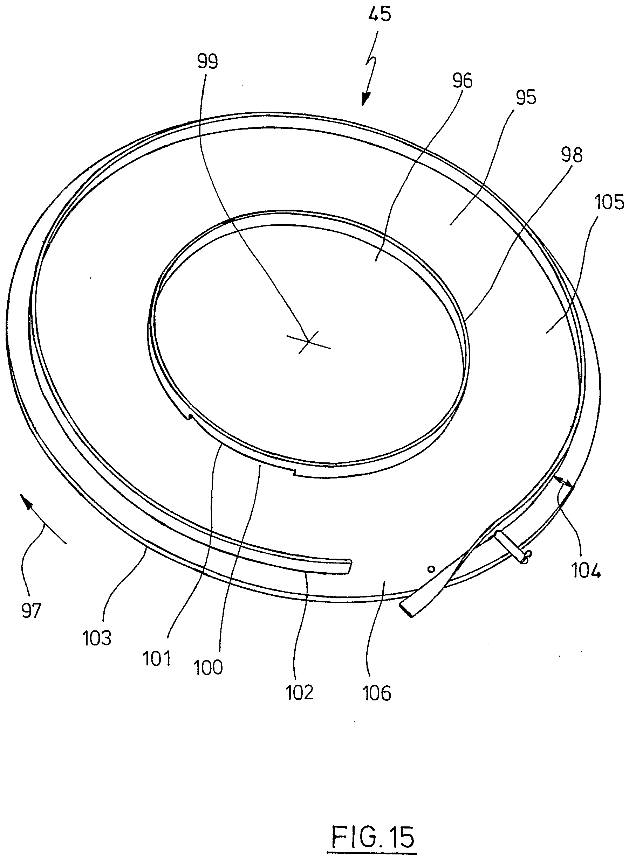

Fig. 15 zeigt eine gegenüber Fig. 5 abgewandelte Ausführungsvariante zur Sortiereinrichtung (45). Die in Fig. 5 dargestellte Sortiereinrichtung ist als ein sogenannter Rollensortierer ausgebildet, der zwei rotierende und im wesentlichen parallel zueinander verlaufende Sortierwalzen besitzt. Die Sortiereinrichtung gemäß Fig. 15 weist einen Rotor (95) auf, der vorzugsweise im wesentlichen kreisförmig ausgebildet ist. Ebenfalls ist der Rotor (95) vorteilhafterweise als eine Platte realisiert. Der Rotor (95) ist mit einem nicht dargestellten Antriebsmotor gekoppelt. Auf einen Zentralbereich (96) des Rotors (95) werden ungeordnete Vorformlinge (1) zugeführt. Aufgrund einer Drehbewegung des Rotors (95) in eine Rotationsrichtung (97) werden die Vorformlinge durch Einwirkung der Zentrifugalkraft zunächst gegen eine erste Führungsschiene (98) gedrückt, die vorzugsweise konzentrisch zu einem Mittelpunkt (99) des Rotors (95), angeordnet ist. Die erste Führungsschiene (98) ist ortsfest positioniert und rotiert nicht gemeinsam mit dem Rotor (95). Vorteilhafterweise ist die erste Führungsschiene (98) dicht oberhalb des Rotors (95) aber mit einem geringen Abstand angeordnet, so daß Reibungskräfte vermieden werden. In jedem Fall ist die Führungsschiene (98) derart positioniert, daß zwischen der Führungsschiene (98) und dem Rotor (95) keine Vorformlinge (1) hindurchrutschen können.

Zur Ermöglichung eines Austrittes der Vorformlinge (1) aus dem Zentralbereich (96) weist die Führungsschiene (98) einen Durchlaß (100) auf, der in einer Umfangsrichtung der Führungsschiene (98) mindestens eine Längenausdehnung besitzt, die größer als eine Längenausdehnung der Vorformlinge (1) dimensioniert ist. Zur Unterstützung eines definierten Austrittes der Vorformlinge (1) aus dem Zentralbereich (96) wird der Durchlaß (100) von einer Brücke (101) begrenzt, die als Teil der Führungsschiene (98) ausgebildet oder mit der Führungsschiene (98) verbunden ist. Die Brücke (101) weist zum Rotor (95) einen Abstand auf, der mindestens einen Durchmesser der Vorformlinge (1) im Bereich des Stützringes (53) entspricht.

Die erste Führungsschiene (98) weist eine sich über den Rotor (95) erhebende Höhe auf, die gewährleistet, daß die Vorformlinge (1) nur durch den Durchlaß (100) hindurch aus dem Zentralbereich (96) austreten können. Vorteilhafterweise beträgt die sich über den Rotor (95) erhebende Höhe der Führungsschiene (98) etwa 5 Zentimeter bis 30 Zentimeter, typischerweise etwa 10 Zentimeter.

Mit einem Abstand zur ersten Führungsschiene (98) erstreckt sich eine zweite Führungsschiene (102), die in radialer Richtung bezüglich eines Außenumfanges (103) des Rotors (95) einen Randabstand (104) aufweist. Die zweite Führungsschiene (102) ist hierdurch zwischen dem Außenumfang (103) und der ersten Führungsschiene (98) angeordnet. Die zweite Führungsschiene (102) ist gleichfalls wie die erste Führungsschiene (98) ortsfest angeordnet und dreht sich nicht gemeinsam mit dem Rotor (95). Im wesentlichen Bereich ihrer Ausdehnung erstreckt sich die zweite Führungsschiene (102) konzentrisch zum Mittelpunkt (99).

Zwischen der ersten Führungsschiene (98) und der zweiten Führungsschiene (102) ist ein Sortierbereich (105) angeordnet, der für eine definierte Orientierung der Vorformlinge (1) vorgesehen ist. Die zweite Führungsschiene (102) weist zum Rotor (95) einen Abstand auf, der etwa größer als ein Durchmesser der Vorformlinge (1) ausgebildet ist, jedoch kleiner als ein Durchmesser des Stützringes (53) dimensioniert ist. Aufgrund der einwirkenden Zentrifugalkräfte rutschen die Vorformlinge bei der Drehbewegung des Rotors (95) mit ihren Körpern unter der zweiten Führungsschiene (102) hindurch und legen sich in einer radialen Richtung innenseitig mit ihren Stützringen (53) an der zweiten Führungsschiene (102) an. Die Vorformlinge werden hierdurch entlang des Außenumfanges (103) des Rotors (95) mit einer definierten Positionierung derart versehen, daß die Vorformlingslängsachsen (81) in einer radialen Richtung des Rotors (95) angeordnet sind und die Mündungsbereiche (51) dem Mittepunkt (99) des Rotors (95) zugewandt sind.

Die entsprechend ausgerichteten Vorformlinge (1) werden aufgrund der Drehbewegung des Rotors (95) entlang der zweiten Führungsschiene (102) bis zu einem Ausgabebereich (106) geführt. Aufgrund des Randabstandes (104) der zweiten Führungsschiene (102) ist gewährleistet, daß die Vorformlinge vor dem Ausgabebereich (106) nicht abkippen können, sondern eine definierte Lage einnehmen.

Die den Führungsschienen (98, 102) zugewandte Oberfläche des Rotors (95) erstreckt sich vorzugsweise in einer horizontalen Ebene. Grundsätzlich ist es aber auch möglich, eine Schrägstellung des Rotors (95) vorzunehmen und insbesondere den Ausgabebereich (106) mit einer geeigneten Höhenpositionierung zu versehen. Eine horizontale Anordnung des Rotors (95) weist aber den Vorteil auf, daß im gesamten Rotorbereich im wesentlichen gleichmäßige Schwerkrafteinflüsse auf die zu sortierenden Vorformlinge (1) einwirken.

Im Ausgabebereich (106) kann die zweite Führungsschiene (102) in radialer Richtung weiter nach außen geführt und um etwa 90° verdreht werden. Die vor dem Ausgabebereich (106) vom Randabstand (104) abgestützten Vorformlinge werden hierdurch im Ausgabebereich (106) definiert in radialer Richtung nach außen geführt und kippen mit ihren Vorformlingskörpern derart ab, daß die Mündungsbereiche (51) in lotrechter Richtung nach oben orientiert angeordnet sind.

Gemäß einer bevorzugten Ausführungsform wird der Endabschnitt der zweiten Führungsschiene (102) im Ausgabebereich (106) wenigstens bereichsweise derart mit einem Abstand zum Außenumfang (103) des Rotors (95) geführt, daß sich zwischen dem Außenumfang (103) und der zweiten Führungsschiene (102) ein Abstand erstreckt, der etwa einem Außendurchmesser der Vorformlinge (1) im Körperbereich entspricht. Hierdurch liegen die Vorformlinge (1) mit ihren Mündungsabschnitten in lotrechter Richtung nach oben orientiert mit ihren Stützringen (53) einerseits auf dem Außenrand des Rotors (95) und andererseits auf der zweiten Führungsschiene (102) auf und werden hierdurch abgestützt und geführt.

Alternativ zu einer Weiterführung der Führungsschiene (102) im Ausgabebereich (106) ist es auch möglich, die Führungsschiene (102) in ein separates Leitelement zu überführen, daß die erforderliche Abstützung und Führung der Vorformlinge (1) vornimmt.

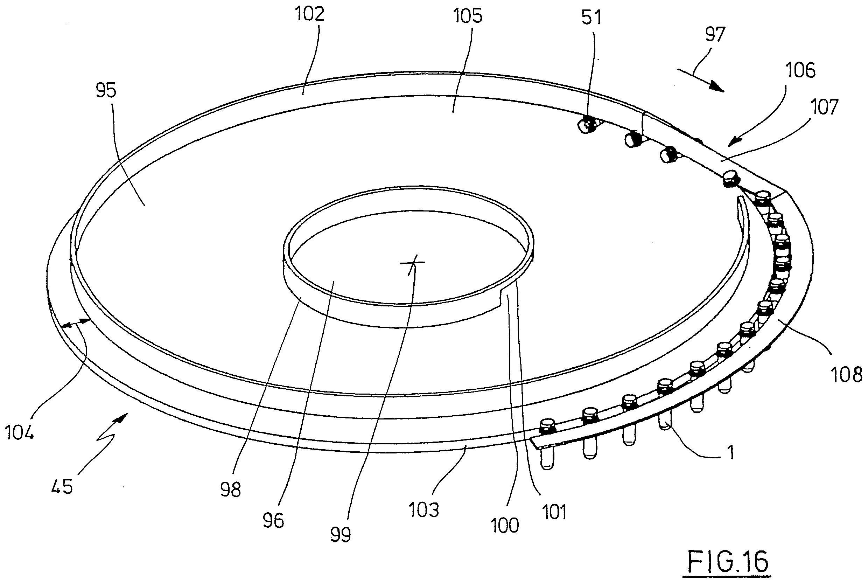

Die Sortierfunktion der Sortiereinrichtung (45) gemäß Fig. 15 wird in Fig. 16 weiter veranschaulicht. Fig. 16 zeigt insbesondere zwischen dem Rotor (95) und der zweiten Führungsschiene (102) bereits ausgerichtete Vorformlinge (1), die in radialer Richtung mit ihren Mündungsabschnitten (51) in Richtung auf den Mittelpunkt (99) des Rotors (95) orientiert sind. Bei der gezeigten Anordnung weisen die Vorformlinge (1) relativ zueinander noch Abstände auf. Bei einer Rotation des Rotors (95) zeigt es sich, daß die zwischen dem Rotor (95) und der zweiten Führungsschiene (102) geführten Vorformlinge langsamer in Rotationsrichtung (97) bewegt werden, als die noch frei auf dem Rotor (95) beweglichen Vorformlinge. Hierdurch können sich weitere Vorformlinge (1) an den bereits zwischen dem Rotor (95) und der zweiten Führungsschiene (102) geführten Vorformlingen (1) vorbeibewegen und in die vorhandenen Lücken zwischen den Vorformlingen (1) einfädeln. Bis zum Erreichen des Ausgabebereiches (106) weisen die Vorformlinge deshalb typischerweise einen sehr geringen Abstand relativ zueinander auf.

Beim Ausführungsbeispiel gemäß Fig. 16 ist die zweite Führungsschiene (102) im Ausgabebereich (106) in eine Übergabeschiene (107) übergeleitet, die im Bereich ihres der zweiten Führungsschiene (102) abgewandten Endes mit einer Auflageschiene (108) gekoppelt ist, die sich mit einem radialen Abstand zum Außenumfang (103) des Rotors (95) erstreckt und hierdurch eine Führung der Vorformlinge (1) ermöglicht. Insbesondere ist daran gedacht, die Vorformlinge (1) entlang der Ausgabeschiene (108) durch einen rollenden Kontakt entlang des Außenumfanges (103) zu bewegen, so daß separate Fördermittel entbehrlich sind.

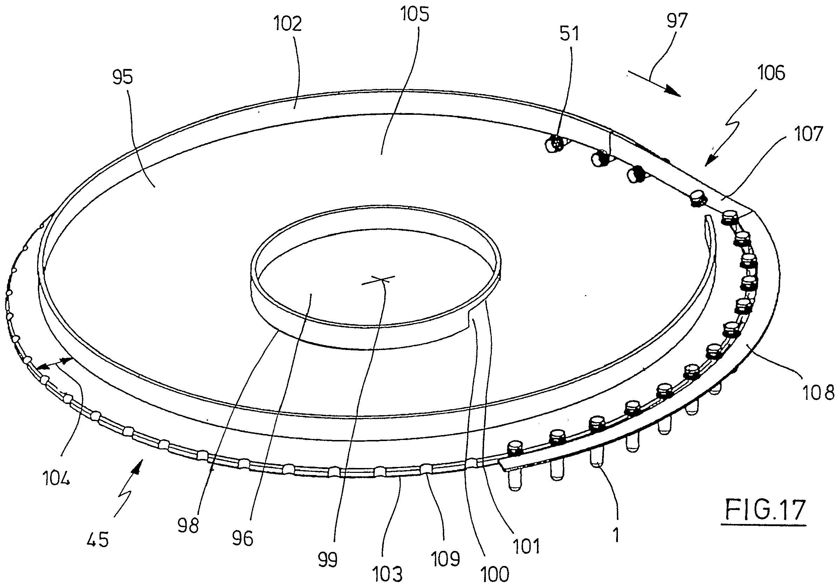

Fig. 17 zeigt eine gegenüber Fig. 16 abgewandelte Ausführungsform, bei der entlang des Außenumfanges (103) Führungstaschen (109) angeordnet sind, um eine definierte Beabstandung der Vorformlinge (1) relativ zueinander vorzugeben. Alternativ zur Verwendung von Führungstaschen (109) können auch andere geeignete Umfangsprofile des Rotors (95) verwendet werden. Die Dimensionierung der Führungstaschen (109) ist derart gewählt, daß nur von den Führungstaschen (109) aufgenommene Vorformlinge zwischen dem Rotor (95) und der Auflageschiene (108) geführt werden können. Die Vorformlinge (1) werden hierdurch im Ausgabebereich (106) so lange vom Randabstand (104) abgestützt, bis eine freie Führungstasche (109) vorbeigeführt wird und der Vorformling (1) in diese Führungstasche (109) abkippen kann.

Die Vorformlinge weisen durch die von den Führungstaschen (109) vorgenommene Positionsvorgabe entlang ihres Transportweges im Bereich der Auflageschiene (108) einen exakt definierten und unveränderlichen Abstand relativ zueinander auf und können mit diesem Abstand zur Blasmaschine (44) übergeben werden. Insbesondere ist daran gedacht, den Abstand der Führungstaschen (109) relativ zueinander derart zu dimensionieren, daß die Vorformlinge (1) relativ zueinander einen Abstand aufweisen, der dem Abstand der Vorformlinge (1) im Bereich der Heizstrecke (24) entspricht. Es werden hierdurch zusätzliche Vereinzelungs- oder Abstandsvorgabeeinrichtungen vermieden und die gesamte Handhabung der Vorformlinge (1) wird erheblich vereinfacht.

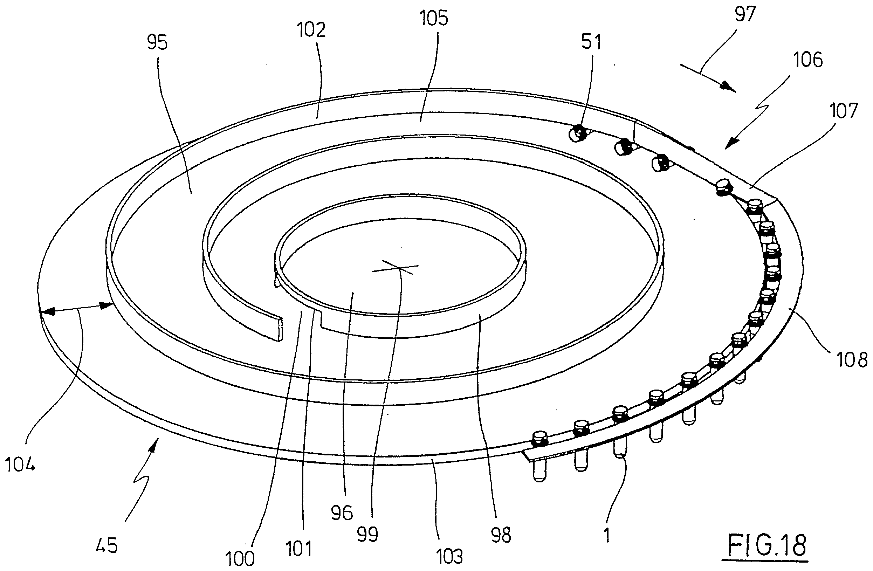

Fig. 18 zeigt eine gegenüber Fig. 16 abgewandelte Ausführungsform, bei der die zweite Führungsschiene (102) nicht im gesamten Bereich ihrer Ausdehnung konzentrisch zum Mittelpunkt (99) des Rotors (95) angeordnet ist, sondern sich wenigstens abschnittsweise spiralartig mit in Rotationsrichtung (97) zunehmendem Abstand zum Mittelpunkt (99) erstreckt. Durch die spiralartige Anordnung der zweiten Führungsschiene (102) wird der Sortierbereich (105) bei einem gleichen Durchmesser des Rotors (95) wesentlich vergrößert und die Sortierleistung hierdurch erhöht. Ein typischer Durchmesser des Rotors (95) liegt im Bereich von 80 Zentimeter bis 2 Meter, bevorzugt bei etwa 1,5 Meter.

Gemäß der in Fig. 18 dargestellten Ausführungsform sind die erste Führungsschiene (98) und die zweite Führungsschiene (102) noch voneinander getrennt. Grundsätzlich ist es bei der gezeigten spiralartigen Anordnung der zweiten Führungsschiene (102) auch möglich, die Führungsschienen (98, 102) als gemeinsames Bauteil auszuführen und den Zentralbereich (96) durch ein dem Mittelpunkt (99) zugewandtes Ende der zweiten Führungsschiene (102) zu begrenzen.

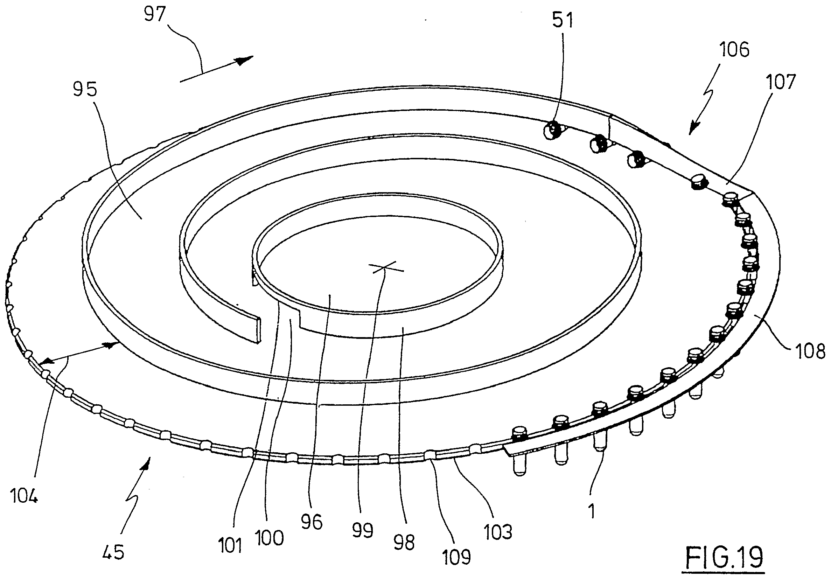

Fig. 19 zeigt eine weitere Ausführungsform, bei der im wesentlichen die Konstruktionsprinzipien gemäß Fig. 17 und Fig. 18 miteinander kombiniert sind. Fig. 19 stellt somit eine Ausführungsform bereit, bei der ein äußerst geringer Sortierraum für die Vorformlinge (1) beansprucht und eine Beabstandung der Vorformlinge als integraler Bestandteil der Sortiereinrichtung (45) ausgebildet ist.

Die vorstehend beschriebenen Ausführungsformen können entweder unabhängig voneinander oder in beliebigen Kombination miteinander eingesetzt werden. Als besonders vorteilhaft wird es angesehen, die Sortiereinrichtung (45) mit dem im wesentlichen horizontal drehenden Rotor (95) mit einer im wesentlichen horizontal verlaufenden Führungseinrichtung (42) zu koppeln, die die Vorformlinge von der Sortiereinrichtung (45) zur Blasmaschine (44) überleitet. Ebenfalls bevorzugt ist die Ausstattung dieser Führungseinrichtung (42) mit der Transportkette (73) und den Rollen (72).

Gemäß einer weiteren bevorzugten Ausführungsform werden die im Bereich der Sortiereinrichtung (45) bereits mit ihren Mündungsabschnitten (51) in lotrechter Richtung nach oben ausgerichteten Vorformlinge auch entlang der Führungseinrichtung (42) mit ihren Mündungsabschnitten (51) in lotrechter Richtung nach oben transportiert und in dieser räumlichen Orientierung im Bereich der Heizstrecke (24) temperiert und im Bereich des Blasrades (25) zu Behältern umgeformt. Die auf dem Blasrad (25) geblasenen Behälter (2) werden dann gleichfalls mit den Mündungsabschnitten in lotrechter Richtung oben orientiert der Ausgabestrecke (32) zugeführt, wo die Behälter (2) vorzugsweise durch eine auf sie einwirkende Luftströmung transportiert werden.

Alternativ zu der in Fig. 5 dargestellten Beschickung der Sortiereinrichtung (41) mit Vorformlingen (1) unter Verwendung eines Steilförderers (46) ist es auch möglich, den Vorratsbehälter (47) für die Vorformlinge (1) in lotrechter Richtung oberhalb der Sortiereinrichtung (45) anzuordnen, um eine nochmals gesteigerte Kompaktheit zu erreichen. Eine definierte Zuführung der Vorformlinge (1) vom Vorratsbehälter (47) zur Sortiereinrichtung (45) kann bei einer derartigen Anordnung dadurch erreicht werden, daß in einem in lotrechter Richtung unteren Bereich des Vorratsbehälters (47) ein umlaufendes Förderband angeordnet ist, das die Vorformlinge (1) in Richtung auf den Rotor (95) transportiert.

Insbesondere ist daran gedacht, den Vorratsbehälter (47) mit einem kuppelartigen Boden zu versehen, der mindestens bereichsweise mit einem Randabstand zu einer Seitenwandung des Vorratbehälters (47) angeordnet ist. Hierdurch wird zwischen dem Boden und der Wandung des Vorratsbehälters (47) ein Durchlaß bereitgestellt, durch den die Vorformlinge auf das unterhalb des Bodens angeordnete Förderband gelangen können. Das Förderband wird hierbei zugleich von Staudruckkräften der gelagerten Vorformlinge entlastet, die zu einer Beschädigung der transportierten Vorformlinge durch mahlwerkartige Kräfte führen könnten.

## Patentansprüche

1. Verfahren zum Transport von Vorformlingen (1) zu einer Einrichtung zur Blasformung von Behältern (2) sowie zur Erzeugung eines Straudruckes der Vorformlinge (1) im Eingangsbereich dieser Einrichtung zur Blasformung von Behältern (2), in der die Vorformlinge (1) nach einer thermischen Konditionierung innerhalb mindestens einer Blasform (4) von einer Reckstange (11) gereckt und durch Blasdruckeinwirkung in Behälter (2) umgeformt werden, **dadurch gekennzeichnet, daß** die Vorformlinge (1) entlang einer Transportbahn zwischen einer Sortiereinrichtung (45) für die Vorformlinge (1) und einem Gehäuse der Blasmaschine und somit vor einer Heizstrecke (24) im wesentlichen in einer horizontalen Richtung transportiert werden, wobei die Vorschubkraft für den Transport der Vorformlinge (1) und somit der Staudruck durch eine Druckluftströmung erzeugt wird.

2. Verfahren nach Anspruch 1, **dadurch gekennzeichnet, daß** die Vorschubkraft zwischen einer Mündung der Vorformlinge (1) und einem Stützring (53) auf die Vorformlinge (1) einwirkt.

3. Verfahren nach einem der Ansprüche 1 oder 2, **dadurch gekennzeichnet, daß** die Vorschubkraft außenseitig auf die Vorformlinge (1) einwirkt.

4. Verfahren nach einem der Ansprüche 1 bis 3, **dadurch gekennzeichnet, daß** die Vorformlinge von der Gasströmung innerhalb eines Strömungskanals bewegt werden.

5. Verfahren nach einem der Ansprüche 1 bis 4, **dadurch gekennzeichnet, daß** die Gasströmung in einer Förderrichtung (56) der Vorformlinge (1) schräg auf die Vorformlinge (1) ausgerichtet wird.

6. Verfahren nach einem der Ansprüche 1 bis 5, **dadurch gekennzeichnet, daß** die Gasströmung entlang des Transportweges der Vorformlinge (1) aus einer Mehrzahl von Ausströmöffnungen (50) heraus in Richtung auf die Vorformlinge (1) geleitet wird.

7. Verfahren nach einem der Ansprüche 1 bis 6, **dadurch gekennzeichnet, daß** die Vorformlinge (1) von der Gasströmung in einer im wesentlichen horizontal verlaufenden Richtung transportiert werden.

8. Verfahren nach einem der Ansprüche 1 bis 7, **dadurch gekennzeichnet, daß** die Vorformlinge (1) in einem einer Blasmaschine (44) zugewandten Bereich ihres Transportweges, nämlich in einem Eingangsbereich der Blasmaschine, zur Erzeugung eines zusätzlichen mechanischen Staudruckes auf einem in lotrechter Richtung schräg nach unten orientierten Transportweg bewegt werden.

9. Verfahren nach einem der Ansprüche 1 bis 8, **dadurch gekennzeichnet, daß** die Gasströmung durch mindestens ein in einer Führungseinrichtung (42) positioniertes Einlegeteil (59) in Richtung auf die Vorformlinge (1) geleitet wird.

10. Vorrichtung zum Transport von Vorformlingen (1) sowie zur Erzeugung eines Straudruckes der Vorformlinge (1) im Eingangsbereich einer Einrichtung zur Blasformung von Behältern (2), der die Vorformlinge (1) zugeführt werden, **dadurch gekennzeichnet, daß** eine Transportbahn für die Vorformlinge (1) im wesentlichen horizontal zwischen einer Sortiereinrichtung (45) für die Vorformlinge (1) und einem Gehäuse der Blasmaschine angeordnet ist, wobei eine Ausströmöffnung (50) für eine die Vorformlinge (1) beaufschlagende Gasströmung über einen Versorgungskanal (49) mit mindestens einer Gasströmungsquelle (41) verbunden ist, und wobei die Ausströmöffnung zur Erzeugung einer Vorschubkraft für den Transport der Vorformlinge (1) und somit zur Erzeugung des Staudruckes durch eine Druckluftströmung angeordnet und ausgerichtet ist.

11. Vorrichtung nach Anspruch 10, **dadurch gekennzeichnet, daß** die Ausströmöffnung (50) auf einem Höhenniveau zwischen einer Mündung und einem Stützring (53) der zu transportierenden Vorformlinge (1) positioniert ist.

12. Vorrichtung nach einem der Ansprüche 10 oder 11, **dadurch gekennzeichnet, daß** die Ausströmöffnung (50) auf eine Außenseite der zu transportierende Vorformlinge (1) ausgerichtet ist.

13. Vorrichtung nach einem der Ansprüche 10 bis 12, **dadurch gekennzeichnet, daß** die Ausströmöffnungen (50) entlang eines Strömungskanals (48) angeordnet sind.

14. Vorrichtung nach einem der Ansprüche 10 bis 13, **dadurch gekennzeichnet, daß** die Ausströmöffnungen (50) relativ zu einer Förderrichtung (56) der Vorformlinge (1) eine schräg nach vorne orientiere Ausrichtung aufweisen.

15. Vorrichtung nach einem der Ansprüche 10 bis 14, **dadurch gekennzeichnet, daß** entlang des Transportweges der Vorformlinge (1) eine Mehrzahl von Ausströmöffnungen (50) angeordnet sind.

16. Vorrichtung nach einem der Ansprüche 10 bis 15, **dadurch gekennzeichnet, daß** eine Führungseinrichtung (42) für die Vorformlinge (1) im wesentlichen horizontal ausgerichtet ist.

17. Vorrichtung nach einem der Ansprüche 10 bis 16, **dadurch gekennzeichnet, daß** die Führungseinrichtung (42) zur Erzeugung eines zusätzlichen mechanischen Staudruckes im Eingangsbereich der Blasmaschine (44) im Bereich ihrer der Blasmaschine (44) zugewandten Ausdehnung einen in Iotrechter Richtung schräg nach unten orientierten Endbereich aufweist.

18. Vorrichtung nach einem der Ansprüche 10 bis 17, **dadurch gekennzeichnet, daß** im Bereich der Führungseinrichtung (42) mindestens ein die Ausströmöffnung begrenzendes Einlegeteil (59) angeordnet ist.

19. Vorrichtung nach einem der Ansprüche 10 bis 18, **dadurch gekennzeichnet, daß** die Führungseinrichtung (42) für die Vorformlinge (1) und die Blasmaschine (44) zu einer gemeinsamen Einrichtung miteinander verbunden sind.

## Claims

1. Method for transporting preforms (1) to a device for blow moulding containers (2) as well as for generating a dynamic pressure of the preforms (1) in the entrance area of this device for blow moulding containers (2), in which the preforms (1) are stretched by a stretching rod (11) after a thermal conditioning inside at least one blow mould (4) and are shaped into containers (2) by means of the impact of blowing pressure, **characterised in that**
the preforms (1) are transported substantially in a horizontal direction along a transport path between a sorting device (45) for the preforms (1) and a housing of the blowing machine and thus upstream of a heating path (24), wherein the feed force for the transport of the preforms (1) and thus the back pressure is generated by means of a compressed air flow.

2. Method according to Claim 1, **characterised in that** the feed force acts on the preforms (1) between an opening of the preforms (1) and a support ring (53).

3. Method according to any one of Claims 1 or 2, **characterised in that** the feed force acts on the preforms (1) on the outer side.

4. Method according to any one of Claims 1 to 3, **characterised in that** the preforms are moved by the gas flow inside a flow channel.

5. Method according to any one of Claims 1 to 4, **characterised in that** the gas flow in a conveying direction (56) of the preforms (1) is aligned diagonally to the preforms (1).

6. Method according to any one of Claims 1 to 5, **characterised in that** the gas flow along the transport path of the preforms (1) is guided out of a plurality of outflow openings (50) in the direction of the preforms (1).

7. Method according to any one of Claims 1 to 6, **characterised in that** the preforms (1) are transported by the gas flow in a direction, which runs substantially horizontally.

8. Method according to any one of Claims 1 to 7, **characterised in that** the preforms (1) are moved on a transport path, which is oriented diagonally downwards in vertical direction, in an area of its transport path facing a blowing machine (44), namely in an entrance area of the blowing machine, so as to generate an additional mechanical dynamic pressure.

9. Method according to any one of Claims 1 to 8, **characterised in that** the gas flow is guided in the direction of the preforms (1) through at least one insert (59), which is positioned in a guide device (42).

10. Device for transporting preforms (1) as well as for generating a dynamic pressure of the preforms (1) in the entrance area of a device for blow moulding containers (2), to which the preforms (1) are supplied, **characterised in that** a transport path for the preforms (1) is arranged substantially horizontally between a sorting device (45) for the preforms (1) and a housing of the blowing machine, wherein an outflow opening (50) for a gas flow, which acts on the preforms (1), is connected to at least one gas flow source (41) via a supply channel (49), and wherein the outflow opening is arranged and aligned to generate a feed force for the transport of the preforms (1) and thus to generate the dynamic pressure by means of a compressed air flow.

11. Device according to Claim 10, **characterised in that** the outflow opening (50) is positioned on a height level between an opening and a support ring (53) of the preforms (1), which are to be transported.

12. Device according to any one of Claims 10 or 11, **characterised in that** the outflow opening (50) is aligned towards an outer side of the preforms (1), which are to be transported.

13. Device according to any one of Claims 10 to 12, **characterised in that** the outflow openings (50) are arranged along a flow channel (48).

14. Device according to any one of Claims 10 to 13, **characterised in that** the outflow openings (50) have an alignment, which is aligned diagonally forwards relative to a conveying direction (56) of the preforms (1).

15. Device according to any one of Claims 10 to 14, **characterised in that** a plurality of outflow openings (50) is arranged along the transport path of the preforms (1).

16. Device according to any one of claims 10 to 15, **characterised in that** a guide device (42) for the preforms (1) is aligned substantially horizontally.

17. Device according to any one of Claims 10 to 16, **characterised in that** the guide device (42) has an end area, which is aligned diagonally downwards in vertical direction, so as to generate an additional mechanical dynamic pressure in the entrance area of the blowing machine (44) in the area of its expansion, which faces the blowing machine (44).

18. Device according to any one of Claims 10 to 17, **characterised in that** at least one insert (59), which delimits the outflow opening, is arranged in the area of the guide device (42).

19. Device according to any one of Claims 10 to 18, **characterised in that** the guide device (42) for the preforms (1) and the blowing machine (44) are connected to one another to form a common device.

## Revendications

1. Procédé de transport de préformes (1) vers une installation de moulage par soufflage de récipients (2), ainsi que de production d'une pression de stagnation des préformes (1) dans la zone d'entrée de cette installation de moulage par soufflage de récipients (2) dans laquelle les préformes (1), après un conditionnement thermique, sont étirées par une barre d'étirage (11) à l'intérieur d'au moins un moule de soufflage (4) et, sous l'action d'une pression de soufflage, transformées en récipients (2), **caractérisé en ce que**, le long d'un parcours entre un dispositif d'arrangement (45) des préformes (1) et un bâti de la machine de moulage par soufflage, et donc avant une zone de chauffage (24), les préformes (1) sont essentiellement transportées selon une direction horizontale, la force d'avance pour le transport des préformes (1), et donc la pression de stagnation, étant produites par un courant d'air comprimé.

2. Procédé selon la revendication 1, **caractérisé en ce que** la force d'avance agit sur les préformes (1) entre leur embouchure et une collerette d'appui (53).

3. Procédé selon l'une des revendications 1 ou 2, **caractérisé en ce que** la force d'avance agit contre l'extérieur des préformes (1).

4. Procédé selon l'une des revendications 1 à 3, **caractérisé en ce que** les préformes sont déplacés par le courant de gaz à l'intérieur d'un canal d'écoulement.

5. Procédé selon l'une des revendications 1 à 4, **caractérisé en ce que** le courant de gaz est dirigé obliquement contre les préformes (1) dans la direction de transport (56) des préformes (1).

6. Procédé selon l'une des revendications 1 à 5, **caractérisé en ce que** le courant de gaz est dirigé contre les préformes (1) à partir d'une pluralité d'orifices d'échappement (50) le long du parcours des préformes (1).

7. Procédé selon l'une des revendications 1 à 6, **caractérisé en ce que** les préformes (1) sont transportées par le courant de gaz selon une direction essentiellement horizontale.

8. Procédé selon l'une des revendications 1 à 7, **caractérisé en ce que** le parcours des préformes (1) sur une section face à une machine de moulage par soufflage (44), à savoir dans une zone d'introduction de la machine de moulage par soufflage, est orienté obliquement vers le bas en vue de la production d'une pression de stagnation mécanique supplémentaire.

9. Procédé selon l'une des revendications 1 à 8, **caractérisé en ce que** le courant de gaz est dirigé contre les préformes (1) par au moins une pièce d'insertion (59) positionnée dans un dispositif de guidage (42).

10. Dispositif de transport de préformes (1) ainsi que de production d'une pression de stagnation des préformes (1) dans la zone d'entrée d'une installation de moulage par soufflage de récipients (2) dans laquelle sont introduites les préformes (1), **caractérisé en ce que** les préformes (1) sont transportées selon un parcours essentiellement horizontal entre un dispositif d'arrangement (45) des préformes (1) et un bâti de la machine de moulage par soufflage, un orifice d'échappement (50) d'un courant de gaz agissant sur les préformes (1) étant branché, par l'intermédiaire d'un canal d'alimentation (49), sur au moins une source de courant de gaz (41) et cet orifice d'échappement étant agencé et orienté pour produire une force d'avance pour le transport des préformes (1) et donc pour produire la pression de stagnation par un courant d'air comprimé.

11. Dispositif selon la revendication 10, **caractérisé en ce que** l'orifice d'échappement (50) est positionnée à un niveau de hauteur situé entre l'embouchure et une collerette d'appui (53) des préformes (1) à transporter.

12. Dispositif selon l'une des revendications 10 ou 11, **caractérisé en ce que** l'orifice d'échappement (50) est dirigé vers une face extérieure des préformes (1) à transporter.

13. Dispositif selon l'une des revendications 10 à 12, **caractérisé en ce que** les orifices d'échappement (50) sont agencés le long d'un canal d'écoulement (48).

14. Dispositif selon l'une des revendications 10 à 13, **caractérisé en ce que** les orifices d'échappement (50) ont une orientation oblique vers l'avant par rapport à la direction de transport (56) des préformes (1).

15. Dispositif selon l'une des revendications 10 à 14, **caractérisé en ce qu'**une pluralité d'orifices d'échappement (50) est agencée le long du parcours des préformes (1).

16. Dispositif selon l'une des revendications 10 à 15, **caractérisé en ce qu'**un dispositif de guidage (42) des préformes (1) est orienté selon une direction essentiellement horizontale.

17. Dispositif selon l'une des revendications 10 à 16, **caractérisé en ce que** le dispositif de guidage (42) présente au niveau de son étendue faisant face à la machine de moulage par soufflage (44) une section d'extrémité orientée obliquement vers le bas en vue de la production d'une pression de stagnation mécanique supplémentaire dans la zone d'introduction de la machine de moulage par soufflage (44).

18. Dispositif selon l'une des revendications 10 à 17, **caractérisé en ce qu'**au moins une pièce d'insertion (59) limitant l'orifice d'échappement est positionnée au niveau du dispositif de guidage (42).

19. Dispositif selon l'une des revendications 10 à 18, **caractérisé en ce que** le dispositif de guidage (42) des préformes (1) et la machine de moulage par soufflage (44) sont reliés pour former une installation commune.
